# EUROPEAN PATENT APPLICATION

(11) **EP 3 581 506 A1**
(43) Date of publication of application: **18.12.2019**
(21) Application number: 19178067.5
(22) Date of filing: 04.06.2019
(51) Int. Cl.: B65B 43/12, B65B 57/04, B65B 59/00, B25J 19/02, B65H 5/00, B65H 15/02, B65B 65/00, B65G 47/248, B65B 43/18

(54) **BAG CONVEYANCE METHOD AND BAG CONVEYANCE APPARATUS**

(30) Priority: 06.06.2018 JP 2018108767
(71) Applicant: Toyo Jidoki Co., Ltd., Tokyo 108-0014 (JP)
(72) Inventor: MORINO, Manabu, Iwakuni-shi, Yamaguchi (JP); FUKUNAGA, Kazuo, Iwakuni-shi, Yamaguchi (JP); KAJIHARA, Shota, Iwakuni-shi, Yamaguchi (JP)
(74) Representative: Grünecker Patent- und Rechtsanwälte PartG mbB

(57) **Abstract**

A bag conveyance method includes the steps of: causing a holding member (16) to hold a bag bundle (90) including a plurality of bags (91); delivering the bag bundle (90) in a standing posture from the holding member (16) to a delivery unit (17); rotating the delivery unit (17) in such a manner that a posture of the bag bundle (90) held by the delivery unit (17) is changed from the standing posture to a lying posture; and conveying the bag bundle (90) in the lying posture from the delivery unit (17) to a supply unit (22).

## Description

### TECHNICAL FIELD

The present invention relates to a bag conveyance method and a bag conveyance apparatus which convey a bag bundle.

### BACKGROUND ART

In order to convey many bags at one time, it has been practiced to convey a bag bundle including a plurality of bags (e.g., package bags). For example, according to an apparatus disclosed in Japanese patent application publication No. 2006-001598, a bag bundle is taken out of a magazine one by one and stored in a tray, and the bag bundle is further taken out of the tray and placed on a conveyor and conveyed to the subsequent stage.

### SUMMARY OF INVENTION

### Technical Problem

Each bag contained in a bag bundle which the apparatus of Japanese patent application publication No. 2006-001598 conveys is a so-called flat bag. If each bag has a uniform thickness throughout as in a flat bag, a plurality of bags can be easily and tidily stacked on top of one another and the thickness of a bag bundle is nearly uniform. On the other hand, in a case of a bag which locally has a thick part as in a zippered bag or a self-standing bag, the thickness of a bag bundle also increases locally. In such a bag bundle, it is difficult to stack a large number of bags in order at the locally thickened part. Therefore, in order to stably hold a bag bundle in a case where each bag locally has a large thickness, it is preferable to hold a part of the bag bundle having a uniform thickness (for example, a part corresponding to the middle portion of each bag).

Meanwhile, in order to hold and release a bag bundle by a holding member such as a gripper, it is required to secure a space (i.e., motion space) necessary for the operation. For example, when a bag bundle is released from a holding member and placed on a predetermined placement unit, it is required to cause the holding member to perform a release operation above the placement unit to release the bag bundle and thereafter to move to a position where the holding member does not interfere with the placement unit. Thus, in order to properly release a bag bundle from the holding member, it is necessary to secure a space for the releasing operation and the evacuating operation of the holding member, in the vicinity of the placement unit. These releasing and evacuating operations are required to be performed while a collision between the holding member and other members is prevented, and in particular, in order to perform the evacuating operation, it is necessary to secure a relatively large space as the motion space for the holding member. For example, when a bag bundle is placed on the placement unit in a laid state (i.e., lying posture), the holding member is required to be moved a relatively long distance in a horizontal direction (i.e., a direction perpendicular to the vertical direction; e.g., the width direction of each bag) in order to perform the evacuating operation.

Meanwhile, in many cases, various members are arranged in the vicinity of the placement unit in the horizontal direction, and for example, a side guide for restricting the width direction position of a bag bundle in sending out the bag bundle on the placement unit toward the subsequent stage is installed in the vicinity of the placement unit. If the holding member places a bag bundle in a lying posture on the placement unit in such a conveyance apparatus, it is required to devise the installation mode of members such as the side guide or to secure a larger motion space for the evacuating operation of the holding member, in order to prevent a collision between the holding member and the members such as the side guide. However, changing the installation mode of members such as the side guide is not always easy. In addition, securing a large motion space in the horizontal direction leads to an increase in the size of the entire apparatus in the horizontal direction. In particular, in a case where a plurality of placement units are arranged in the horizontal direction, the holding member needs to avoid a collision with another placement unit installed adjacent to the corresponding placement unit or the like, and therefore it is necessary to secure a larger motion space.

Further, from the viewpoint of preventing an increase in size of the apparatus in the horizontal direction, it is preferable to deliver a bag bundle in a standing posture from the holding member to the placement unit. In this case, the holding member can be moved in the height direction (that is, the direction parallel to the vertical direction) in order to perform the evacuating operation. Therefore, the motion space for the evacuating operation of the holding member can be largely secured in the height direction, and the expansion of the motion space in the horizontal direction can be curbed.

However, in some cases, it is required to supply a bag bundle in a lying posture to a stage subsequent to the placement unit. If a bag bundle being in a standing posture is delivered to the placement unit in such an apparatus, it is necessary to change the posture of the bag bundle from the standing posture to a lying posture. In order to meet the demand, it is conceivable to provide a separate mechanism for changing the posture of a bag bundle between the placement unit and the subsequent stage. However, providing such a separate mechanism leads to an increase in the overall size of the apparatus in the horizontal direction.

The present invention has been made in view of the above-mentioned circumstances, and it is an object of the present invention to provide an apparatus and a method capable of delivering a bag bundle being in a standing posture from a holding member to a delivery unit and of delivering a bag bundle being in a lying posture from the delivery unit to a supply unit while preventing enlargement of the apparatus in the horizontal direction.

### Solution to Problem

One aspect of the present invention is directed to a bag conveyance method comprising the steps of: causing a holding member to hold a bag bundle including a plurality of bags; delivering the bag bundle in a standing posture from the holding member to a delivery unit; rotating the delivery unit in such a manner that a posture of the bag bundle held by the delivery unit is changed from the standing posture to a lying posture; and conveying the bag bundle in the lying posture from the delivery unit to a supply unit.

The holding member may approach the delivery unit from above while holding the bag bundle, may release the bag bundle to deliver the bag bundle to the delivery unit, and may, after releasing the bag bundle, move away from the delivery unit upward.

Another aspect of the present invention is directed to a bag conveyance apparatus comprising: a stocker in which a bag bundle including a plurality of bags is accommodated; a holding member which picks up and holds the bag bundle accommodated in the stocker; a posture change mechanism which includes a delivery unit to which the bag bundle in a standing posture is delivered from the holding member, and a rotation mechanism which rotates the delivery unit to change a posture of the bag bundle held by the delivery unit from the standing posture to a lying posture; and a conveyance unit which includes a push unit and a conveyance drive mechanism driving the push unit, and causes the conveyance drive mechanism to drive the push unit in such a manner that the push unit moves the bag bundle in the lying posture from the delivery unit toward a supply unit.

The plurality of posture change mechanisms may be provided, and the plurality of conveyance units may be provided and be assigned to the plurality of posture change mechanisms respectively.

The delivery unit may have an opening part, a first wall part which faces the opening part, and a second wall part which extends in a direction forming 90 degrees with respect to a direction in which the first wall part extends, the holding member may deliver the bag bundle to the delivery unit through the opening part, the bag bundle in the standing posture delivered from the holding member may be placed on the first wall part, and the bag bundle in the lying posture held by the delivery unit may be placed on the second wall part.

The delivery unit may have a groove which extends toward the supply unit, and the push unit may be driven by the conveyance drive mechanism to travel in the groove to move the bag bundle from the delivery unit toward the supply unit.

The bag conveyance apparatus may comprise a guide member which is able to be placed in a regulation position for restricting a position of the bag bundle held by the delivery unit and in a retreat position for not restricting a position of the bag bundle held by the delivery unit, wherein, the delivery unit may have a cutout portion, and the guide member placed in the regulation position may be located in the cutout portion, and the guide member placed in the retreat position may be located outside the cutout portion.

The bag conveyance apparatus may comprise a detection unit, wherein, the push unit may arrange the bag bundle in a supply position of the supply unit, the detection unit may detect presence or absence of a bag in the supply position, and the conveyance drive mechanism may drive the push unit according to detection result of the detection unit in such a manner that a new bag bundle is conveyed toward the supply position according to presence or absence of a bag in the supply position.

According to the present invention, while enlargement of the apparatus in the horizontal direction is prevented, a bag bundle being in a standing posture can be delivered from a holding member to a delivery unit and a bag bundle being in a lying posture can be delivered from the delivery unit to a supply unit.

### BRIEF DESCRIPTION OF DRAWINGS

Fig. 1 is a plan view of a bag conveyance system.
Fig. 2 is a side view of a bag conveyance apparatus (see arrow II shown in Fig. 1).
Fig. 3 is a side view of the bag conveyance system based on the sectional line III-III shown in Fig. 1.
Fig. 4 is a perspective view showing a configuration example of a stocker.
Fig. 5 is a functional block diagram showing a control mechanism in each bag conveyance apparatus.
Fig. 6 is a plan view schematically showing the flow of conveyance of a bag bundle.
Fig. 7 is a plan view schematically showing the flow of conveyance of a bag bundle.
Fig. 8 is a plan view schematically showing the flow of conveyance of a bag bundle.
Fig. 9 is a plan view schematically showing the flow of conveyance of a bag bundle.
Fig. 10 is a plan view schematically showing the flow of conveyance of a bag bundle.
Fig. 11 is a plan view schematically showing the flow of conveyance of a bag bundle.
Fig. 12 is a side view of a bag conveyance system according to one modification.

### DESCRIPTION OF EMBODIMENTS

Embodiments of the present invention will be described below with reference to the drawings.

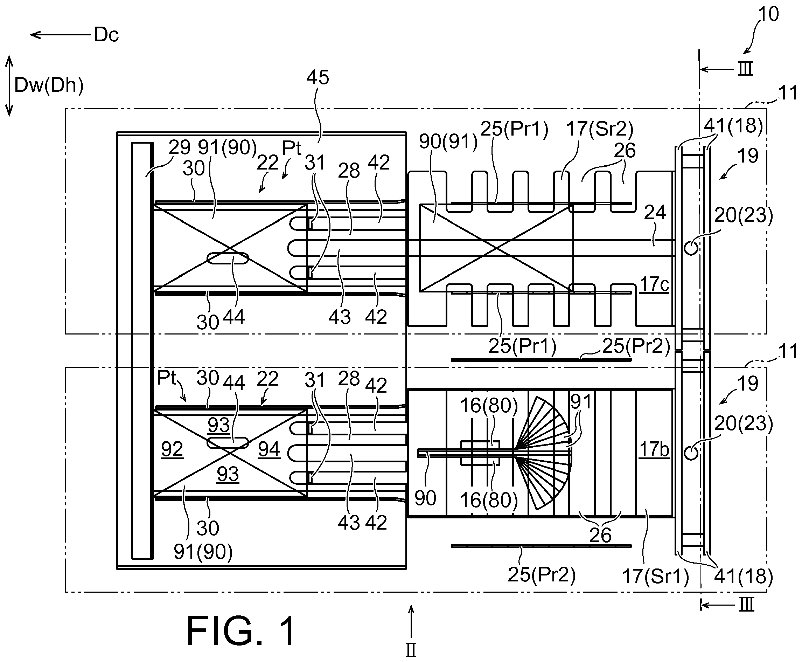

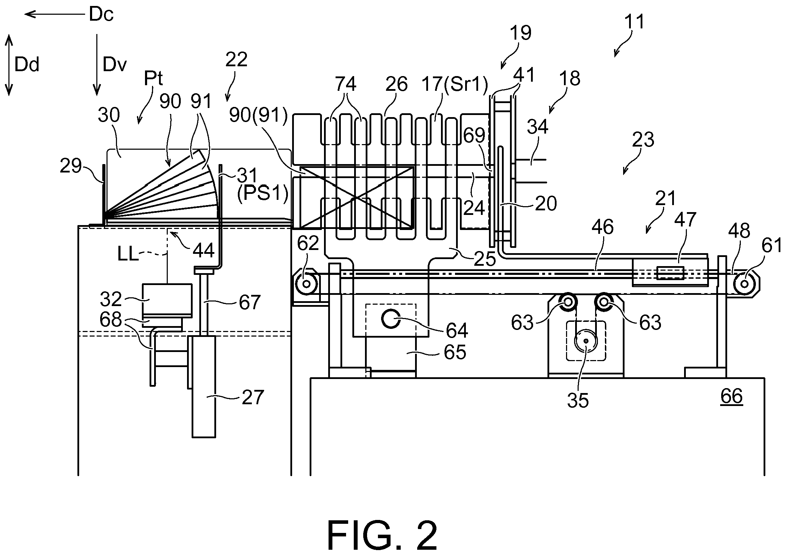

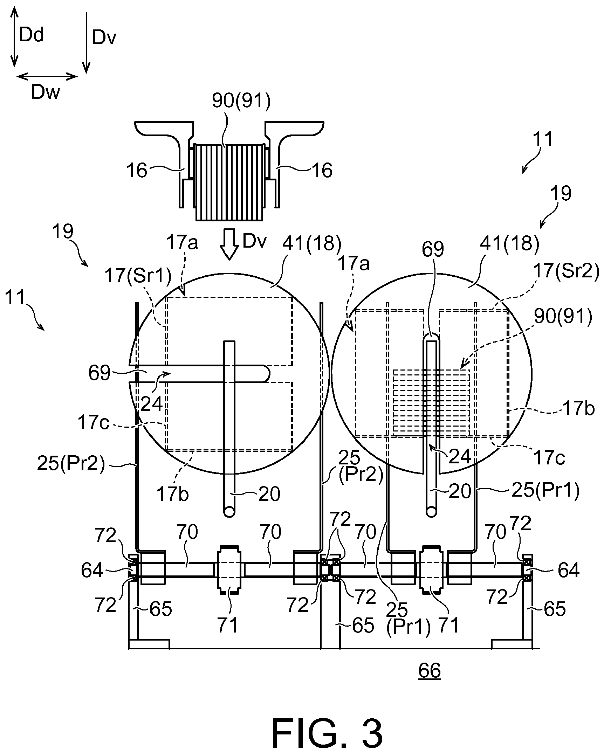

Fig. 1 is a plan view of a bag conveyance system 10. Fig. 2 is a side view of a bag conveyance apparatus 11 (see arrow II shown in Fig. 1). Fig. 3 is a side view of the bag conveyance system 10 based on the sectional line III-III shown in Fig. 1. In order to facilitate understanding, illustration of some elements is omitted in each of Figs. 1 to 3. For example, in Fig. 1, a part of a conveyance unit 23 is omitted. Moreover, in Fig. 2, illustration of a frame 45 and one side position regulation member 30, etc. is omitted. Further, in Fig. 3, illustration of the conveyance unit 23, etc. is omitted. Further, in each of the drawings, diagonal lines are indicated on a side face (sheet-like wall) of a bag 91 (for example, a bag 91 disposed at the extreme end position of a bag bundle 90).

The bag conveyance system 10 of the present embodiment includes two bag conveyance apparatuses 11, and these bag conveyance apparatuses 11 are disposed adjacent to each other in the horizontal direction Dh (in particular, in the width direction Dw). In Fig. 1, the rough extent where each bag conveyance apparatus 11 exists is represented by a rectangle drawn by a two-dot chain line. These bag conveyance apparatuses 11 have the same configuration as each other. Below, the configuration and the operation of one bag conveyance apparatus 11 will be mainly described, but the description is similarly applied to the other bag conveyance apparatus 11 as well.

The bag conveyance apparatus 11 conveys a bag bundle 90. A bag bundle 90 includes a plurality of bags 91 and has a portion which is locally different in thicknesses from the other portion. The specific shape, size and use of a bag bundle 90 and a bag 91 are not limited. Typically, in a case where each bag 91 has a portion with a locally different thickness, each bag bundle 90 has a locally different thickness at the corresponding part. For example, in a zippered package bag, the thickness of the part where a zip (fastener) is provided locally increases. Further, in a case of a self-standing bag, the bottom portion of the bag has folded parts or is expanded in the thickness direction, and thus the thickness of the bottom portion of the bag locally increases. Therefore, in a case where each bag 91 is a zippered package bag or a self-standing bag, the thickness of a bag bundle 90 locally increases. In each of bag bundles 90 and each of bags 91, the position of the locally different thickness portion is not limited, but in many cases, the thickness of a part near the end of a bag bundle 90 and a bag 91 (in particular, near the mouth portion or near the bottom portion) locally increases. Each bag 91 may be an empty bag or may house contents. The contents are not limited, and may be solid, liquid, gas or other states, and for example, a sheet-like object may be accommodated in each bag 91. Each of a plurality of bags 91 constituting an illustrated bag bundle 90 is an empty self-standing bag, and the thickness of the bottom portion of each bag 91 and each bag bundle 90 is larger than the thickness of the other portion.

The size of a bag bundle 90 has three-dimensional anisotropy, and by changing how to place a bag bundle 90, the height of the bag bundle 90 (that is, the size in the height direction Dd) is changed. Generally, a standing posture is a state in which the size in the height direction Dd is relatively large, a lying posture is a state in which the size in the height direction Dd is relatively small, and an upright state corresponds to a standing posture and a recumbent state corresponds to a lying posture. These postures of a bag bundle 90 may be determined based on the size in the height direction Dd of a portion of the bag bundle 90 in which the thickness does not locally change. For example, if a bag bundle 90 has a locally large thickness, the posture of the bag bundle 90 may be determined based on the size in the height direction Dd of a portion having a relatively small thickness of the bag bundle 90 (that is, a portion having a uniform thickness). Further, in a case where each bag 91 includes two sheet-like side surface portions facing each other and edges of the side surface portions are joined to each other to form the side edges of each bag 91, a bag bundle 90 placed on a placement unit takes a lying posture in a state where a side surface portion of one bag 91 included in the bag bundles 90 (specifically, a bag 91 located at the extreme end position) is in contact with the placement unit, and a bag bundle 90 placed on a placement unit takes a standing posture in a state where an edge portion of each bag 91 is in contact with the placement unit.

The width direction Dw referred to here is determined in relation to the orientation of the placement surface on which a bag bundle 90 is placed and the conveyance direction Dc of a bag bundle 90 placed on the placement surface. In the present embodiment, the conveyance direction Dc of a bag bundle 90 placed on the placement surface is parallel to the horizontal direction Dh that is perpendicular to the vertical direction Dv, the width direction Dw is parallel to the horizontal direction Dh and is perpendicular to the conveyance direction Dc, the height direction Dd is parallel to the vertical direction Dv (in which gravity acts), and the normal direction of the placement surfaces of placement units (specifically, a delivery unit 17 and a supply unit 22 (a support member 28) are described below) is parallel to the height direction Dd. In the present specification, unless otherwise noted, the conveyance direction Dc refers to the direction in which a bag bundle 90 is conveyed from the delivery unit 17 toward the supply unit 22.

A bag conveyance method performed by a bag conveyance apparatus 11 includes a step of holding a bag bundle 90 with holding members 16, a step of delivering a bag bundle 90 in a standing posture from the holding members 16 to the delivery unit 17, a step of rotating the delivery unit 17 so as to change the posture of a bag bundle 90 held by the delivery unit 17 from a standing posture to a lying posture, and a step of conveying a bag bundle 90 in a lying posture from the delivery unit 17 to the supply unit 22. In particular, the rotation of the delivery unit 17 is performed so as to rotate about an axis which extends parallel to the conveyance direction Dc for a bag bundle 90 and extends to penetrate the delivery unit 17. Since the delivery unit 17 is rotated in this manner to alter the posture of a bag bundle 90, there is no need to install a separate mechanism for changing the posture of the bag bundle 90 between the delivery unit 17 and the supply unit 22. Therefore, while enlargement of the bag conveyance system 10 and the bag conveyance apparatus 11 in the horizontal direction is prevented, a bag bundle 90 being in a standing posture can be delivered from the holding members 16 to the delivery unit 17 and a bag bundle 90 being in a lying posture can be delivered from the delivery unit 17 to the supply unit 22.

Further, the holding members 16 of the present embodiment approach the delivery unit 17 from above while holding a bag bundle 90, and subsequently release the bag bundle 90 to deliver the bag bundle 90 to the delivery unit 17. Then, after releasing the bag bundle 90, the holding members 16 move upward away from the delivery unit 17. Since the holding members 16 are moved in the height direction Dd in this manner to cause the holding members 16 to approach or go away from the delivery unit 17, the space above the delivery unit 17 can be effectively used for a motion space for the holding members 16. Accordingly, expansion of the motion space for the holding members 16 in the horizontal direction Dh can be suppressed. Further, it is possible that, in delivering a bag bundle 90 from the holding members 16 to the delivery unit 17, the holding members 16 are prevented from colliding with various instruments provided in the vicinity of the delivery unit 17 (in particular, various instruments provided in the vicinity of the delivery unit 17 in the horizontal direction Dh (e.g., guide members 25 described below, etc.)).

Below, the specific configurations of the illustrated bag conveyance system 10 and a bag conveyance apparatus 11 will be described. The configurations of the bag conveyance system 10 and the bag conveyance apparatuses 11 illustrated in drawings are merely one example, and the bag conveyance system 10 and the bag conveyance apparatuses 11 may be realized by other configurations.

A bag conveyance apparatus 11 includes holding members 16, a posture change mechanism 19 and a conveyance unit 23.

The holding members 16 have a configuration capable of holding and releasing a bag bundle 90 and can be moved while holding a bag bundle 90. Although the specific configuration of the holding members 16 is not limited, typically, the holding members 16 can be configured by a gripper (for example, a robot hand) capable of gripping a bag bundle 90. For example, the holding members 16 sandwich a bag bundle 90 therebetween and press a side surface portion of the bag 91 disposed at one extreme end of the bag bundle 90 and a side surface portion of the bag 91 disposed at the other extreme end in directions facing each other, so as to grip the whole bag bundle 90.

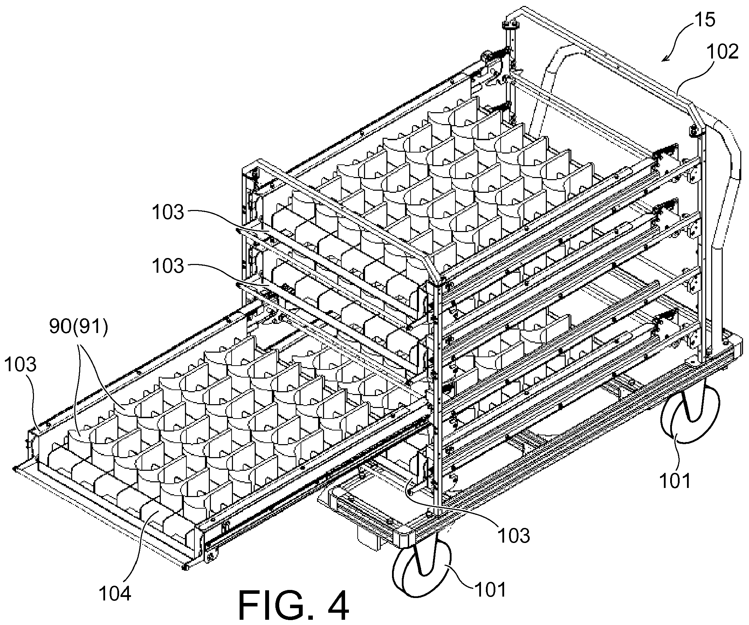

The holding members 16 of the present embodiment are configured by a three-dimensional transferring unit 80 (a multi-jointed robot) which can pick up bag bundles 90 stored in a stocker 15 (see Fig. 4) one by one and can move a bag bundle 90 three-dimensionally. The holding members 16 hold a bag bundle 90 from one lateral edge side, and place the bag bundle 90 on the delivery unit 17 in a state where this one lateral edge is directed upward. Thus, when the holding members 16 deliver a bag bundle 90 to the delivery unit 17, this one lateral edge forms the upper end portion of the bag bundle 90, and the holding members 16 approach the delivery unit 17 from above while holding the upper end portion of the bag bundle 90, and deliver the bag bundle 90 to the delivery unit 17.

In general, in many bags 91, a lateral edge is a sealed portion, both lateral edges are formed by the seal portions opposing each other, and a side edge of a bag bundle 90 is constituted by the assembly of lateral edges of a plurality of bags 91 constituting the bag bundle 90. However, the lateral edges of a bag 91 may not be sealed portions, and such bags 91 may be bundled to form a bag bundle 90.

In the present embodiment, a plurality of posture change mechanisms 19 (two posture change mechanisms 19 in the illustrated example) are provided adjacent to each other in the horizontal direction Dh, and a plurality of conveyance units 23 (two conveyance units 23 in the illustrated example) are assigned to the posture change mechanisms 19 respectively. Each posture change mechanism 19 has a delivery unit 17 and a rotation mechanism 18. The delivery unit 17 receives a bag bundle 90 in a standing posture from the holding members 16. The rotation mechanism 18 rotates the delivery unit 17 so as to change the attitude of a bag bundle 90 held by the delivery unit 17 from a standing posture to a lying posture.

Each delivery unit 17 illustrated in drawings is formed in a box shape which has an opening part 17a. Specifically, the delivery unit 17 includes the opening part 17a, a first wall part 17b facing the opening part 17a, and a second wall part 17c extending in a direction forming 90 degrees with respect to the direction in which the first wall part 17b extends. The holding members 16 insert a bag bundle 90 in a standing posture into the delivery unit 17 through the opening part 17a. A bag bundle 90 in a standing posture delivered from the holding members 16 is placed on the first wall part 17b in the delivery unit 17. The delivery unit 17 is turned (i.e., is rotated) in a reciprocating manner by the rotation mechanism 18 so as to be placed in a first rotation state Sr1 and a second rotation state Sr2. The first rotation state Sr1 is a state in which the delivery unit 17 is ready to receive a bag bundle 90 in a standing posture from the holding members 16, and the opening part 17a of the delivery unit 17 placed in the first rotation state Sr1 is directed upward. The second rotation state Sr2 is a state in which the delivery unit 17 is ready to support a bag bundle 90 in a lying posture, and the opening part 17a of the delivery unit 17 placed in the second rotation state Sr2 is directed in the width direction Dw (i.e., toward one guide member 25). A bag bundle 90 in a lying posture which the delivery unit 17 holds is placed on the second wall part 17c. Since the delivery unit 17 is formed in a box shape as described above, the posture of a bag bundle 90 held by the delivery unit 17 can be changed quickly and easily in a limited space.

The illustrated rotation mechanism 18 has two disks 41 connected to each other and a rotation drive unit 34 which rotates the two disks 41 about an axis in an integrated fashion. The two disks 41 are disposed apart from each other with respect to the conveyance direction Dc of a bag bundle 90, the rotation drive unit 34 is fixedly connected to one disk 41, and the delivery unit 17 is fixed to the other disk 41. The rotation drive unit 34 may be constituted by a servomotor for example and transmits rotational power to the disks 41. The rotation of the two disks 41 is performed in such a manner that the two disks 41 rotate about an axis which extends parallel to the conveyance direction Dc and penetrates the two disks 41, and the delivery unit 17 rotates along with the two disks 41.

A disk notch portion 69 which is to be passed by a push unit 20 is formed in the disk 41 disposed on the delivery unit 17 side of the two disks 41. The home position for the push unit 20 is set in the space between the two disks 41, and the push unit 20 linearly reciprocates between the home position and the supply unit 22. When the disks 41 are placed in the first rotation state Sr1 along with the delivery unit 17, the disk notch portion 69 extends in the width direction Dw as shown in Fig. 3, and therefore the position of the disk notch portion 69 and the position of the push unit 20 do not correspond to each other. On the other hand, when the disks 41 are placed in the second rotation state Sr2 along with the delivery unit 17, the disk notch portion 69 extends in the height direction Dd, and therefore the position of the disk notch portion 69 and the position of the push unit 20 correspond to each other and the disk notch portion 69 is disposed at a position where the push unit 20 can travel through the disk notch portion 69.

A conveyance unit 23 includes a push unit 20 and a conveyance drive mechanism 21 that drives the push unit 20. The conveyance drive mechanism 21 drives the push unit 20 in such a manner that the push unit 20 applies a force to a bag bundle 90 in a lying posture so as to move the bag bundle 90 from the delivery unit 17 toward the supply unit 22.

The delivery unit 17 has a groove 24 extending toward the supply unit 22. The push unit 20 is driven by the conveyance drive mechanism 21 to move in the groove 24, moves a bag bundle 90 from the delivery unit 17 toward the supply unit 22, and arranges the bag bundle 90 at the supply position Pt.

The position of the groove 24 changes in accordance with the rotation state of the delivery unit 17 as shown in Fig. 3. When the delivery unit 17 is placed in the first rotation state Sr1, the groove 24 is positioned laterally (i.e., in the width direction Dw) with respect to a bag bundle 90 on the delivery unit 17, and therefore the position of the groove 24 and the position of the push unit 20 do not correspond to each other. On the other hand, when the delivery unit 17 is placed in the second rotation state Sr2, the groove 24 is positioned below a bag bundle 90 on the delivery unit 17 (i.e., in the vertical direction Dv), and the position of the groove 24 and the position of the push unit 20 correspond to each other and the groove 24 is disposed at a position where the push unit 20 can travel through the groove 24. The groove 24 and the disk notch portion 69 are disposed at positions where the groove 24 and the disk notch portion 69 face each other even when the two disks 41 and the delivery unit 17 are placed in either the first rotation state Sr1 or the second rotation state Sr2.

The conveyance drive mechanism 21 includes a conveyance drive unit 35, a moving belt 48 driven by the conveyance drive unit 35, a moving body 47 engaged with the moving belt 48 and moving along with the travel motion of the moving belt 48, and a drive guide 46 which guides the moving body 47. The moving belt 48 has an endless shape and is wound around a first pulley 61 and a second pulley 62 which are disposed apart in a direction parallel to the conveyance direction Dc, and the extension direction of the moving belt 48 is changed by direction change pulleys 63 so that the moving belt 48 is wound around the rotation body (that is, the rotation shaft) of the conveyance drive unit 35. The drive guide 46 extends in parallel to the conveyance direction Dc of a bag bundle 90, and guides the moving body 47 in the direction parallel to the conveyance direction Dc. The moving body 47 is driven by the moving belt 48 and guided by the drive guide 46 so as to reciprocate along a predetermined path extending in parallel to the conveyance direction Dc. The push unit 20 is fixed to the moving body 47, and the push unit 20 moves along with the moving body 47.

The conveyance drive unit 35 can drive the moving belt 48 to cause the moving belt 48 to travel in the forward direction and the reverse direction. By causing the moving belt 48 to travel in the forward direction, the push unit 20 moves along with the moving body 47 so as to approach the supply unit 22 (specifically, so as to move away from the home position between the disks 41). On the other hand, by causing the moving belt 48 to travel in the reverse direction, the push unit 20 moves along with the moving body 47 so as to move away from the supply unit 22 (specifically, so as to approach the home position).

When the push unit 20 is moved together with the moving body 47, the disks 41 and the delivery unit 17 are placed in the second rotation state Sr2, and the groove 24 and the disk notch portion 69 are disposed at positions where the push unit 20 can travel through the groove 24 and the disk notch portion 69. Specifically, when moving in the conveyance direction Dc, the push unit 20 passes through the disk notch portion 69 and enters the groove 24, and then moves along the groove 24 toward the supply unit 22. At that time, the push unit 20 moves towards the supply unit 22 (in particular, a forward-backward groove 43) while being in contact with the rear side end portion of a bag bundle 90 on the delivery unit 17, so as to push the bag bundle 90 to convey the bag bundle 90 to the supply unit 22. Thus, the direction of a force applied from the push unit 20 to a bag bundle 90 corresponds to the conveyance direction Dc.

The illustrated bag conveyance apparatus 11 further includes guide members 25. Further, the delivery unit 17 has a plurality of cutout portions 26.

Two guide members 25 are provided with respect to each bag conveyance apparatus 11, and these guide members 25 forming a pair are provided to be able to move back and forth in the width direction Dw at positions which are distanced from each other in the width direction Dw and between which the delivery unit 17 is interposed. Each guide member 25 has a plurality of extension portions 74 extending in the height direction Dd (see Fig. 2), and the plurality of extension portions 74 are provided at positions separated from each other in the conveyance direction Dc. The extension portions 74 are located at positions corresponding to the cutout portions 26 respectively. In a state where the delivery unit 17 is placed in the second rotation state Sr2, each extension portion 74 can enter and retreat from the corresponding cutout portion 26 in the width direction Dw. Thus, the guide members 25 can be arranged in regulation positions Pr1 for restricting the position of a bag bundle 90 held by the delivery unit 17 from the width direction Dw and in retreat positions Pr2 for not restricting the position of a bag bundle 90 held by the delivery unit 17 from the width direction Dw. Specifically, the guide members 25 (i.e., the extension portions 74) disposed at the regulation positions Pr1 are located in the cutout portions 26, and the guide members 25 (i.e., the extension portions 74) disposed at the retreat positions Pr2 are located outside the cutout portions 26.

When the delivery unit 17 is placed in the first rotation state Sr1, the guide members 25 are disposed at the retreat positions Pr2. While the guide members 25 are disposed at the retreat positions Pr2, the guide members 25 does not collide with the delivery unit 17 even when the delivery unit 17 rotates. Therefore, when the delivery unit 17 is rotated (for example, when the state of the delivery unit 17 is changed from the first rotation state Sr1 to the second rotation state Sr2, and when the state of the delivery unit 17 is changed from the second rotation state Sr2 to the first rotation state Sr1), the guide members 25 are disposed at the retreat positions Pr2. On the other hand, while the delivery unit 17 is placed in the second rotation state Sr2, the guide members 25 can be disposed at the regulation positions Pr1. The guide members 25 arranged at the regulation positions Pr1 contact the lateral edges of a bag bundle 90 held by the delivery unit 17 arranged in the second rotation state Sr2 so as to regulate the position of the bag bundle 90 in the width direction Dw. Therefore, when a bag bundle 90 on the delivery unit 17 is regulated by the guide members 25 (for example, when the bag bundle 90 is caused to move from the delivery unit 17 toward the supply unit 22), the guide members 25 are disposed at the regulation positions Pr1.

The two guide members 25 forming a pair move symmetrically with respect to the width direction Dw in this manner and are provided so as to be able to reciprocate in a direction such that the two guide members 25 approach each other and in a direction such that the two guide members 25 move away from each other. Such movement of the guide members 25 can be realized by any mechanism. The illustrated guide members 25 move in the width direction Dw based on the rotation of a screw shaft 64.

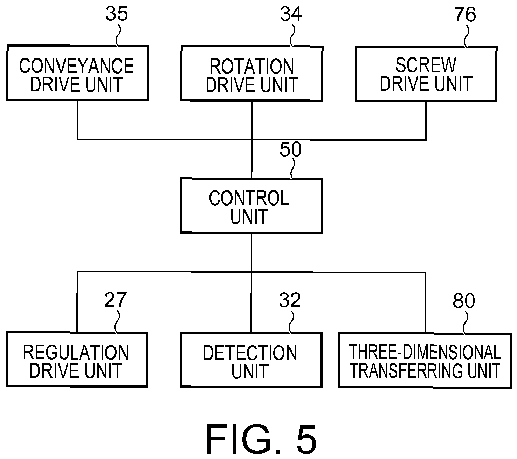

As shown in Figs. 2 and 3, the guide members 25 are installed on a stand 66 via the screw shaft 64 and screw support members 65. The screw shaft 64 is rotatably supported by the screw support members 65 via bearings 72. The two guide members 25 forming a pair are engaged with one screw shaft 64, and when the screw shaft 64 is rotated around its axis, these two guide members 25 move symmetrically in the width direction Dw. Two screw portions 70 are formed on the screw shaft 64, and a screw rotation portion 71 is provided at a central portion of the screw shaft 64 between the two screw portions 70. The two guide members 25 forming a pair are coupled in a screw engagement manner to the two screw portions 70 disposed on the opposite sides via the screw rotation portion 71, respectively. The orientations of the grooves of the two screw portions 70 formed in each screw shaft 64 are opposite to each other, and when the screw shaft 64 is rotated around its axis in one direction, the two guide members 25 approach each other, and when the screw shaft 64 is rotated around its axis in the other direction, the two guide members 25 move away from one another. Each screw shaft 64 is rotated around its axis by causing the screw rotation portion 71 to be rotated by a screw drive unit 76 (see Fig. 5).

A bag bundle 90 pushed by the push unit 20 and conveyed from the delivery unit 17 is disposed at the supply position Pt of the supply unit 22.

The supply unit 22 includes a support member 28, a front position regulation member 29, side position regulation members 30 and rear position regulation members 31. A bag bundle 90 in a lying posture which has been conveyed from the delivery unit 17 is placed on the support member 28. The front position regulation member 29 restricts the front portion 92 (corresponding to the left position in Fig. 1) of a bag bundle 90 on the support member 28 by contacting the front portion 92 of the bag bundle 90. The side position regulation members 30 restrict the side positions (corresponding to the upper position and the lower position in Fig. 1) of a bag bundle 90 on the support member 28 by contacting the side portions 93 of the bag bundle 90. The rear position regulation members 31 restrict the rear position (corresponding to the right position in Fig. 1) of a bag bundle 90 on the support member 28 by contacting the rear portion 94 of the bag bundle 90.

The front position regulation member 29 forms a contact surface which is to be in contact with the front end of a bag bundle 90 based on the conveyance direction Dc. The side position regulation members 30 form contact surfaces which is to be in contact with the ends of a bag bundle 90 in the width direction Dw. The side position regulation members 30 are members separate from the guide members 25. The front position regulation member 29 and side position regulation members 30 illustrated in drawings are fixedly provided at predetermined positions. However, it is possible to manually adjust the positions in the horizontal direction Dh of the front position regulation member 29, the side position regulation members 30, and the rear position regulation members 31. Thus, when the sizes of a bag 91 and a bag bundle 90 are changed, the positions in the horizontal direction Dh of the front position regulation member 29, the side position regulation members 30, and the rear position regulation members 31 can be adjusted according to the sizes of a bag 91 and a bag bundle 90.

The front position regulation member 29, the side position regulation members 30, and/or the rear position regulation members 31 may be movably provided by a mechanism (not shown) under the control of a control unit 50 (see Fig. 5) described later. The positions in the horizontal direction Dh of a bag 91 and a bag bundle 90 at the supply position Pt may be detected by a sensor (not shown), and according to the detection results, the positions in the horizontal direction Dh of the front position regulation member 29, the side position regulation members 30 and/or the rear position regulation members 31 may be automatically adjusted by a movement mechanism (not shown). For example, when the position adjustment of a bag 91 is performed in the supply position Pt, the front position regulation member 29 and the side position regulation members 30 may be protruded above the support member 28. On the other hand, when a bag 91 (or a bag bundle 90) is sent from the supply position Pt to the subsequent stage (for example, a packaging machine), the front position regulation member 29 and/or the side position regulation members 30 can be moved downward so as not to protrude above the support member 28. In this situation, the bag 91 (or the bag bundle 90) can be easily and smoothly sent from the supply position Pt to the subsequent stage.

The method of sending a bag bundle 90 from the supply position Pt to the subsequent stage is not limited, and the bag bundle 90 may be moved by a push unit or a holding member (not shown). In particular, when bags 91 are taken out one by one from the supply position Pt with a suction device such as a suction cup and sent to the subsequent stage, each bag 91 can be smoothly sent from the supply position Pt to the subsequent stage without causing the front position regulation member 29 and the side position regulation members 30 to move in the height direction Dd.

The illustrated bag conveyance apparatus 11 further includes a regulation drive unit 27 that drives the rear position regulation members 31. The regulation drive unit 27 has an extendable rod 67 extending in the height direction Dd, and the rear position regulation members 31 are attached to the tip end of the extendable rod 67. The amount of protrusion of the extendable rod 67 from the main body of the regulation drive unit 27 in the height direction Dd is variable, and the regulation drive unit 27 can be configured by an air cylinder for example. The position in the height direction Dd of the rear position regulation members 31 is variable according to the amount of expansion and contraction (that is, the amount of protrusion from the main body) of the extendable rod 67. When the amount of protrusion of the extendable rod 67 is maximum, the rear position regulation members 31 are placed in the protrusion position Ps1, and when the amount of protrusion of the extendable rod 67 is minimum, the rear position regulation members 31 are placed in the avoidance position Ps2.

Protrusion grooves 42 are formed in the support member 28. The protrusion grooves 42 are provided at positions corresponding to the rear position regulation members 31. In the illustrated bag conveyance apparatus 11, two rear position regulation members 31 are provided, and two protrusion grooves 42 are formed in the support member 28 at positions corresponding to the two rear position regulation members 31 respectively. The rear position regulation members 31 placed in the protrusion positions Ps1 penetrate the corresponding protrusion grooves 42 and protrude above the support member 28, and the rear position regulation members 31 placed in the avoidance positions Ps2 are disposed below the support member 28 without penetrating the corresponding protrusion grooves 42.

A regulation drive unit 27 moves the rear position regulation members 31 in the height direction Dd, and places the rear position regulation members 31 in the protrusion positions Ps1 and the avoidance positions Ps2. The rear position regulation members 31 disposed at the protrusion positions Ps1 protrude upward beyond the support member 28 and can contact a bag bundle 90 on the support member 28. On the other hand, the rear position regulation members 31 disposed at the avoidance position Ps2 do not protrude upward beyond the support member 28 and do not contact a bag bundle 90 moving from the delivery unit 17 toward the supply unit 22. Thus, during at least a part of the period in which the push unit 20 moves a bag bundle 90 from the delivery unit 17 toward the supply position Pt of the supply unit 22, the regulation drive unit 27 arranges the rear position regulation members 31 in the avoidance positions Ps2. On the other hand, after a bag bundle 90 conveyed from the delivery unit 17 is disposed on the support member 28 (in particular, at the supply position Pt), the regulation drive unit 27 arranges the rear position regulation members 31 in the protrusion positions Ps1.

Thus, of the area above the support member 28, the range surrounded by the front position regulation member 29, the side position regulation members 30 and the rear position regulation members 31 corresponds to the supply position Pt. A forward-backward groove 43 extending in the conveyance direction Dc is formed in the support member 28, and the push unit 20 can enter and retreats from the forward-backward groove 43. In a state where the two disks 41 and the delivery unit 17 are placed in the second rotation state Sr2, the groove 24, the forward-backward groove 43 and the disk notch portion 69 are located on the same straight line extending in the conveyance direction Dc. When the push unit 20 conveys a bag bundle 90 to the supply position Pt, the push unit 20 enters the forward-backward groove 43 from the groove 24 and moves in the conveyance direction Dc in the forward-backward groove 43 to push the bag bundle 90 up to the supply position Pt. While a bag bundle 90 pushed by the push unit 20 passes through the position corresponding to the rear position regulation members 31, the rear position regulation members 31 are placed in the avoidance positions Ps2 and do not obstruct the movement of the bag bundle 90.

The illustrated bag conveyance apparatus 11 further includes a detection unit 32 that detects the presence or absence of a bag 91 at the supply position Pt of the supply unit 22, as shown in Fig. 2. The conveyance drive mechanism 21 drives the push unit 20 according to the detection results of the detection unit 32, and a new bag bundle 90 is conveyed toward the supply position Pt according to the presence or absence of a bag 91 at the supply position Pt.

The detection unit 32 of the present embodiment emits a laser beam LL, and detects the presence or absence of a bag 91 in the supply position Pt according to the presence or absence of the reflection of the laser beam LL. The detection unit 32 is fixedly supported by a regulation drive unit 27 via a sensor support unit 68 below the support member 28. On the other hand, a detection hole 44 is formed in the support member 28, and the detection hole 44 is provided at a position corresponding to the supply position Pt. The laser beam LL emitted from the detection unit 32 passes through the detection hole 44. When a bag 91 is disposed at the supply position Pt, the laser beam LL is reflected by the bag 91, and at least a part of the reflected laser beam LL is received by the detection unit 32. On the other hand, when a bag 91 is not disposed at the supply position Pt, the laser beam LL is not reflected toward the detection unit 32. Thus, the presence or absence of a bag 91 at the supply position Pt can be detected according to whether or not the detection unit 32 receives the reflected laser beam LL.

As described above, the holding members 16 pick up a bag bundle 90 from the stocker 15 and deliver the bag bundle 90 to the delivery unit 17. The stocker 15 holds one or more bag bundles 90 in an arbitrary posture. The specific form of the stocker 15 is not limited, and it is possible to suitably use, for example, the stocker 15 as shown in Fig. 4.

Fig. 4 is a perspective view showing a configuration example of the stocker 15. The stocker 15 shown in Fig. 4 has wheels 101 and can move between a bag bundle replenishment position for replenishing new bag bundles 90 to the stocker 15, and a bag bundle supply position where a bag bundle 90 is taken out of the stocker 15 by the holding members 16. A main body portion 102 of the stocker 15 supports a plurality of accommodation units 103, and each accommodation unit 103 is provided to be able to slide to be arranged in a pullout position in which each accommodation unit 103 protrudes from the main body portion 102 in the horizontal direction Dh. A partition member 104 is provided in each accommodation unit 103, and a plurality of bag bundles 90 are held in a standing posture by the partition member 104. In the example shown in Fig. 4, many bag bundles 90 are accommodated in each accommodation unit 103 in a state where a lateral edge of each bag bundle 90 is directed upward and the locally thick portion (the bottom portion in the present embodiment) of each bag bundle 90 (and bags 91) is directed towards the pullout side (i.e., to the left side in Fig. 4).

The three-dimensional transferring unit 80, the main body portion of which is not illustrated in the drawings, adjusts the direction and the posture of the holding members 16 so as to grip each bag bundle 90 held by the partition member 104 from one lateral edge side of each bag bundle 90 (i.e., the lateral edge side directed upward). Then, the holding members 16 move upward while gripping a bag bundle 90 so as to pick up the bag bundle 90 from an accommodation unit 103. Then, the holding members 16 move to above the delivery unit 17 while gripping the bag bundle 90. At this time, the holding members 16 adjust the direction and the posture of the bag bundle 90 in such a manner that one lateral edge side of the bag bundle 90 gripped by the holding members 16 is directed upward. Then, the holding members 16 approach the delivery unit 17 from above, release the bag bundle 90 to place the bag bundle 90 on the delivery unit 17, and then move upward to move away from the delivery unit 17. The holding members 16 repeatedly perform the above-described operation so as to sequentially supply bag bundles 90 from the stocker 15 to the delivery unit 17.

The bag conveyance system 10 further includes a control unit 50 that controls the operation of each bag conveyance apparatus 11 having the above-described configuration. The control unit 50 is directly or indirectly connected to various devices controlled by wire or wireless. The installation position of the control unit 50 is not limited, and the control unit 50 may be installed at any place. Further, the control unit 50 may be configured by a single device or may be configured by two or more devices, and such two or more devices may be installed at mutually separated positions.

Fig. 5 is a functional block diagram showing a control mechanism in each bag conveyance apparatus 11. A conveyance drive unit 35, a rotation drive unit 34, a screw drive unit 76, a regulation drive unit 27, a detection unit 32, and a three-dimensional transferring unit 80 are connected to the control unit 50.

The detection results of the detection unit 32 are sent to the control unit 50. When the detection result of the detection unit 32 indicates that a bag 91 is not present at the supply position Pt, the control unit 50 controls the conveyance drive unit 35 to move the push unit 20 in the conveyance direction Dc to convey a bag bundle 90 on the delivery unit 17 towards the supply unit 22. Further, the control unit 50 drives the regulation drive unit 27 based on the detection results of the detection unit 32.

The control unit 50 controls the conveyance drive unit 35, the rotation drive unit 34, the screw drive unit 76, the regulation drive unit 27, and the three-dimensional transferring unit 80 in association with one another. Specifically, the control unit 50 adjusts the position of the push unit 20, the position of the holding members 16, the rotational state of the delivery unit 17, the positions of the rear position regulation members 31, and the positions of the guide members 25 in association with one another.

The control unit 50 may control other elements.

Next, an overall flow of processing for conveying a bag bundle 90 from the delivery unit 17 to the supply unit 22 will be described.

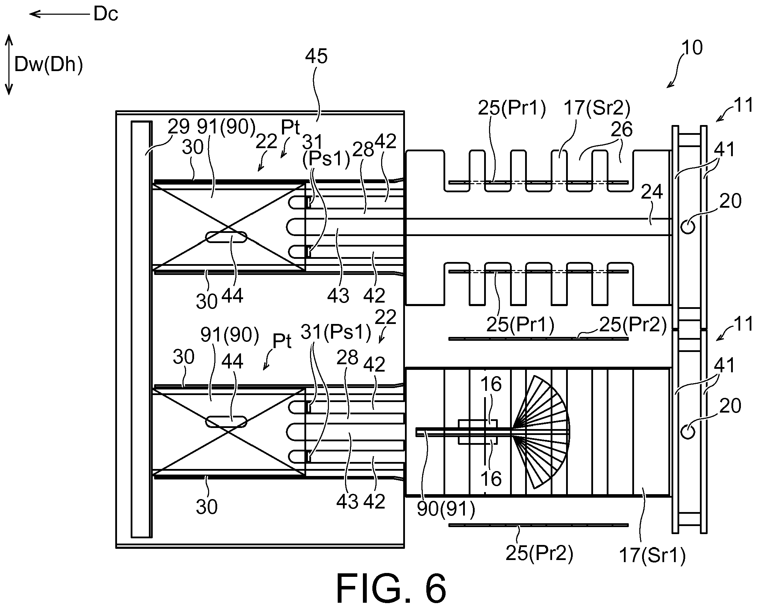

Figs. 6 to 11 are plan views schematically showing the flow of conveyance of a bag bundle 90. In the following description, the bag conveyance apparatus 11 shown below of the two bag conveyance apparatuses 11 illustrated in Figs. 6 to 11 will be mainly described.

First, a bag bundle 90 is taken out of the stocker 15 (see Fig. 4) by the holding members 16. Then, as shown in Fig. 6, the holding members 16 arrange the bag bundle 90 on the delivery unit 17 while holding the bag bundle 90. At this time, the holding members 16 place the bag bundle 90 in a standing posture state. Moreover, the delivery unit 17 and the disks 41 are placed in the first rotation state Sr1. Further, the guide members 25 are disposed at the retreat positions Pr2. Furthermore, the push unit 20 is disposed at the home position between the disks 41. Although a bag 91 is disposed at the supply position Pt of the supply unit 22 in Fig. 6, a bag 91 may not be present at the supply position Pt.

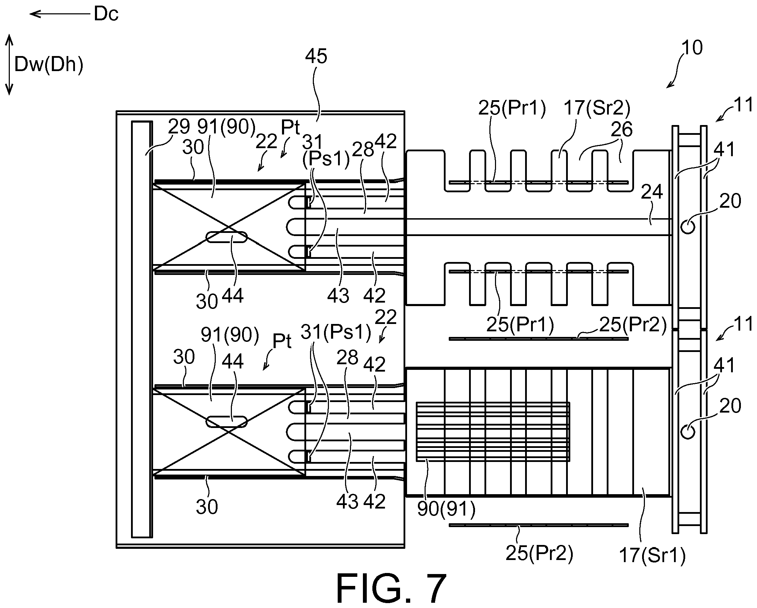

Then, the holding members 16 perform a release operation to release the bag bundle 90, and after that, evacuate upward and perform preparation for supplying a next bag bundle 90 to the delivery unit 17. As shown in Fig. 7, the bag bundle 90 released from the holding members 16 is placed on the delivery unit 17 while maintaining a standing posture. Actually, in many cases, the bag bundle 90 released from the restraint by the holding members 16 is placed on the delivery unit 17 in a state of leaning against one side wall portion of the delivery unit 17.

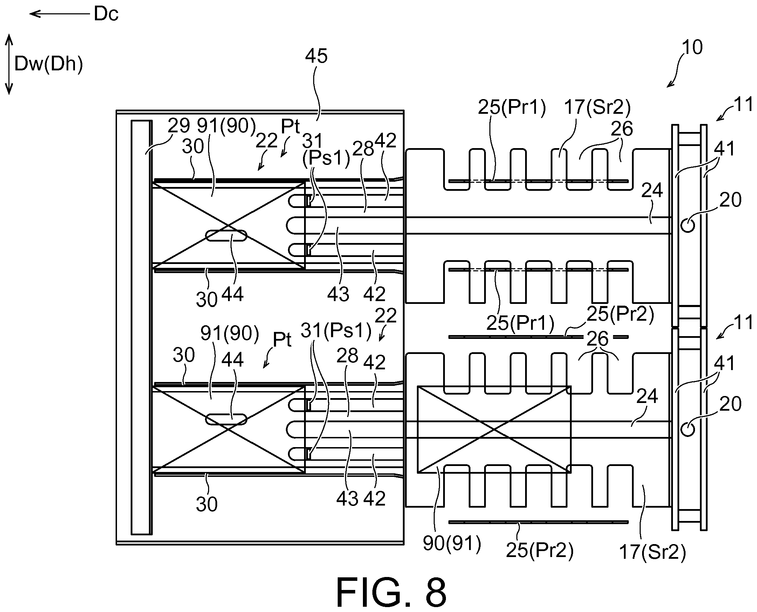

Then, as shown in Fig. 8, the delivery unit 17 is rotated along with the disks 41 to be placed in the second rotation state Sr2, and the posture of the bag bundle 90 on the delivery unit 17 is changed from a standing posture to a lying posture. At this time, the guide members 25 are disposed at the retreat positions Pr2 and does not inhibit the rotation of the delivery unit 17.

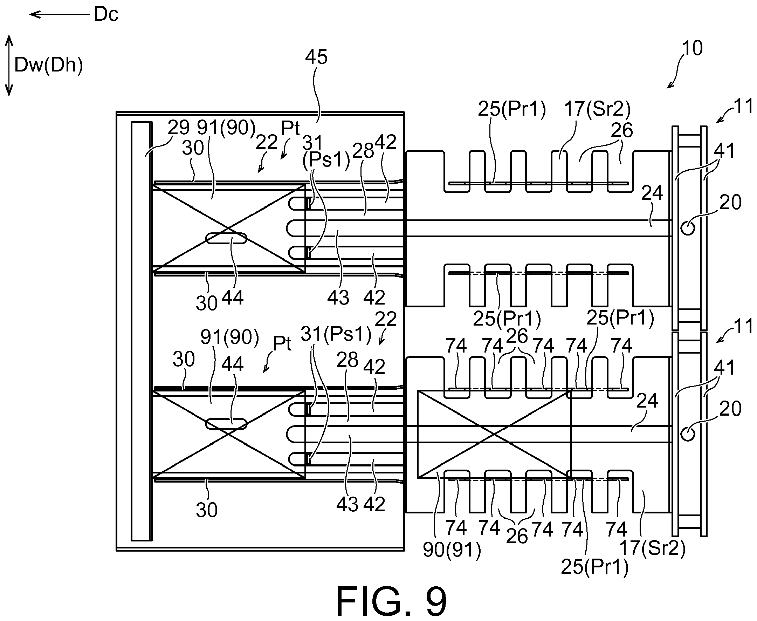

Then, as shown in Fig. 9, the guide members 25 are moved from the retreat positions Pr2 to the regulation positions Pr1, and the extension portions 74 of the guide members 25 are disposed in the corresponding cutout portions 26. Consequently, the bag bundle 90 taking a lying posture on the delivery unit 17 is restricted from the width direction Dw by the guide members 25 (in particular, the extension portions 74) and is arranged at an appropriate position in the horizontal direction Dh (in particular, the width direction Dw).

Then, according to the detection results of the detection unit 32, the bag conveyance apparatus 11 maintains the state shown in Fig. 9 until a bag 91 is not present at the supply position Pt of the supply unit 22. Although a bag(s) 91 is disposed at the supply position Pt of the supply unit 22 in Figs. 6 to 9, one or more bags 91 may be transferred from the supply position Pt of the supply unit 22 to the subsequent stage by a conveyance system (not shown) during the states shown in Figs. 6 to 9. Further, the transfer of all the bags 91 arranged at the supply position Pt of the supply unit 22 to the subsequent stage may be completed within the period of the states shown in Figs. 6 to 9.

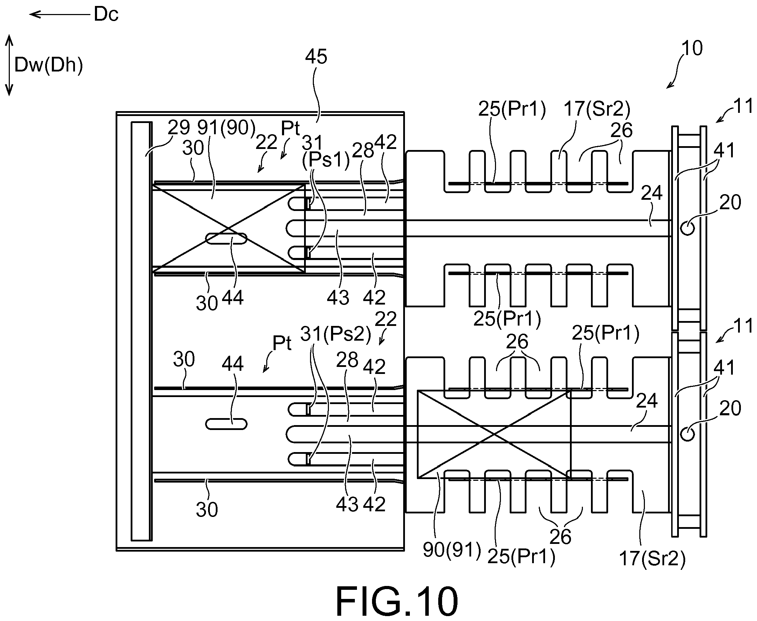

After a bag 91 is not present at the supply position Pt of the supply unit 22, the rear position regulation members 31 are moved to the avoidance positions Ps2 as shown in Fig. 10. On the other hand, the push unit 20 is moved in the conveyance direction Dc to push a bag bundle 90 on the delivery unit 17 to the supply position Pt of the supply unit 22. Actually, after the control unit 50 confirms that a bag bundle 90 is not present at the supply position Pt based on the detection results of the detection unit 32, the push unit 20 is moved in such a manner that a new bag bundle 90 is conveyed from on the delivery unit 17 onto the supply unit 22. At this time, the bag bundle 90 is conveyed up to the supply position Pt while the width direction position of the bag bundle 90 is restricted by the side position regulation members 30 and the guide members 25 arranged in the regulation positions Pr1. Further, the rear position regulation members 31 are disposed at the avoidance positions Ps2 at least while the bag bundle 90 passes the position corresponding to the rear position regulation members 31.

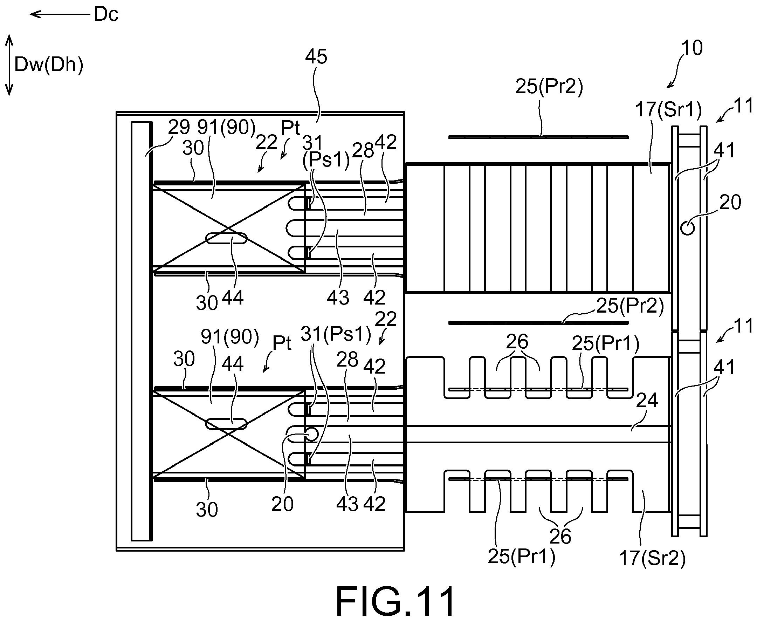

Then, after the bag bundle 90 has passed the position corresponding to the rear position regulation members 31 (preferably, after the bag bundle 90 is disposed at the supply position Pt), the rear position regulation members 31 are placed in the protrusion positions Ps1 as shown in Fig. 11. The timing at which the rear position regulation members 31 are arranged from the avoidance positions Ps2 to the protrusion positions Ps1 may be determined based on the detection results of the detection unit 32 or may be determined based on information directly or indirectly indicating the position of the push unit 20 (i.e., for example, information indicating the drive state of the conveyance drive unit 35 (the conveyance drive mechanism 21)). The control unit 50 can control the regulation drive unit 27 to arrange the rear position regulation members 31 at the protrusion positions Ps1 at an appropriate timing.

After the bag bundle 90 is disposed at the supply position Pt, the bag conveyance apparatus 11 is returned to the state shown in Fig. 6 again, and prepares to deliver a next bag bundle 90 from the holding members 16 to the delivery unit 17. For example, while the delivery unit 17 and the disks 41 are placed in the second rotation state Sr2, the push unit 20 is moved towards the disks 41 through the forward-backward groove 43, the groove 24 and the disk notch portion 69 and is disposed at the home position between the disks 41. In addition, while the delivery unit 17 and the disks 41 are placed in the second rotation state Sr2, the guide members 25 are returned from the regulation positions Pr1 to the retreat positions Pr2. Further, after the push unit 20 returns to the home position and the guide members 25 returns to the retreat positions Pr2, the delivery unit 17 and the disks 41 are rotated to be placed in the first rotation state Sr1.

By performing the above-described series of processes under the control of the control unit 50, the bag conveyance apparatus 11 can deliver a bag bundle 90 in a standing posture from the holding members 16 to the delivery unit 17 and deliver a bag bundle 90 in a lying posture from the delivery unit 17 to the supply unit 22. By repeating the above-described series of processes, the bag conveyance apparatus 11 can continuously supply a plurality of bag bundles 90 to the supply unit 22.

Not only the bag conveyance apparatus 11 shown in the lower side of Figs. 6 to 11 but also the bag conveyance apparatus 11 shown in the upper side can convey bag bundles 90 in the same manner. The bag conveyance apparatuses 11 included in the bag conveyance system 10 may convey bag bundles 90 while correlating each other or may convey bag bundles 90 independently of each other. In order to correlate the operations of two or more bag conveyance apparatuses 11 with each other, transmission and reception of information may be performed between the control units 50 that control the operations of the bag conveyance apparatuses 11 respectively, or the operations of two or more bag conveyance apparatuses 11 may be controlled by a single control unit 50.

Further, while a new bag bundle 90 is delivered to the delivery unit 17 in a state where a bag bundle 90 exists at the supply position Pt in the example shown in Figs. 6 to 11, a new bag bundle 90 may be delivered to the delivery unit 17 as shown in Fig. 6 after all the bags 91 are taken out of the supply position Pt and no bag bundle 90 exists at the supply position Pt (specifically, based on the detection results of the detection unit 32).

As described above, according to the present embodiment, a bag bundle 90 in a standing posture can be delivered from the holding members 16 to the delivery unit 17, and a bag bundle 90 in a lying posture can be supplied to the supply unit 22. Further, the increase in the size in the horizontal direction Dh of the whole apparatus can be prevented by reducing the working space in the horizontal direction Dh for the holding members 16 necessitated for the delivery of a bag bundle 90 (in particular, the working space for delivering a bag bundle 90 to the delivery unit 17). In particular, even when a plurality of posture change mechanisms 19 are provided adjacent to each other in the horizontal direction Dh, the distance between the posture change mechanisms 19 can be made relatively small, and therefore the bag conveyance system 10 can be properly installed in a limited space while the interference between members is avoided. Further, when a bag bundle 90 is delivered from the holding members 16 to the delivery unit 17, it can be effectively avoided that the holding members 16 collide with the delivery unit 17 or the like, and thus a bag bundle 90 can be delivered stably and accurately.

Further, according to the present embodiment, in the delivery unit 17, the postures of all the bags 91 included in a bag bundle 90 can be changed at one time. Thus, the posture of each bag 91 can be changed from a standing posture to a lying posture in a very short time as compared with a case where the posture of the bags 91 is individually changed.

Further, since the delivery unit 17 is configured as a rotation body, by rotating the delivery unit 17 about its axis, the posture of a bag bundle 90 can be changed. Thus, there is no need to provide a separate mechanism for changing the posture of a bag bundle 90.

Further, the holding members 16 can avoid a part of a bag bundle 90 where the thickness is locally changing and can hold a part which has a uniform thickness. Thus, a bag bundle 90 including a plurality of bags 91 and having a locally different thickness part can be accurately held and conveyed.

Further, since the groove 24 and the cutout portions 26 are formed in the delivery unit 17, the push unit 20 and the guide members 25 can perform a desired operation without colliding with the delivery unit 17. Thus, there is no need to provide a special mechanism for preventing such a collision, and further enlargement of the apparatus can be prevented.

Further, bags 91 disposed at the supply position Pt can be accurately positioned by the front position regulation member 29, the side position regulation members 30, and the rear position regulation members 31. As a result, a bag 91 can be properly taken out from the supply position Pt, and the bag 91 in a desired posture can be accurately supplied to the subsequent stage. For example, in a case where a sealing process of the mouth portion of a bag 91 is performed in the subsequent stage, if the supply posture and the supply position of a bag 91 are not stable with respect to the subsequent stage, the seal position and the seal width may vary to cause a seal failure. On the other hand, by arranging bags 91 at a desired position in the supply position Pt with high accuracy as in the present embodiment, such sealing failure can be effectively prevented.

Further, the presence or absence of a bag 91 in the supply position Pt of the supply unit 22 can be accurately detected by the detection unit 32, and a bag bundle 90 can be supplied to the supply position Pt at an appropriate timing.

### [Modifications]

The present invention is not limited to the above-described embodiment and modifications, and various modifications may be added.

For example, when a bag bundle 90 is delivered from the holding members 16 to the delivery unit 17, the movement direction of the holding members 16 is not limited. In the above embodiment, the holding members 16 are moved in a direction basically parallel to the height direction Dd at least immediately before and after a bag bundle 90 is delivered to the delivery unit 17, but, the movement direction of the holding members 16 is not limited to the direction parallel to the height direction Dd. For example, the holding members 16 may be moved in an oblique direction including a direction component in the height direction Dd.

Further, the position of a portion of a bag bundle 90 of which the thickness locally varies (for example, a portion of which the thickness is locally increased) is not limited, and one end of a bag bundle 90 or a part near the one end may have a locally large thickness. In the above embodiment, a self-standing bag having a locally large thickness at the bottom portion is used as a bag 91, but the above-described apparatus and method can be applied to a bag having a locally large thickness at the mouth portion (for example, a zippered package bag).

Further, the specific direction in which a bag bundle 90 is delivered in a standing posture to the delivery unit 17 is not limited, and for example, a bag bundle 90 in a standing posture may be delivered to the delivery unit 17 in a state where the bottom side, the mouth side, or the other end side of each bag 91 included in a bag bundle is directed downward. Further, the gripping direction of the holding members 16 with respect to a bag bundle 90 is not limited, and the holding members 16 may hold a bag bundle 90 from the bottom side, the mouth side, or the other end side of the bag bundle 90.

In the above embodiment, the second rotation state Sr2 of the disks 41 and the delivery unit 17 is shifted by 90 degrees around the rotation axis with respect to the first rotation state Sr1, but the angular shift amount between the first rotation state Sr1 and the second rotation state Sr2 is not limited to 90 degrees. For example, the opening direction of the opening part 17a of the delivery unit 17 placed in the first rotation state Sr1 may be a direction inclined with respect to the height direction Dd. Further, the bottom surface of the delivery unit 17 placed in the first rotation state Sr1 may extend in parallel with the horizontal direction Dh or may extend in a direction inclined with respect to the horizontal direction Dh. In a case where the extension direction of the bottom surface of the delivery unit 17 placed in the first rotation state Sr1 is not parallel to the horizontal direction Dh, it is possible that a bag bundle 90 (that is, bags 91) having been released from the holding members 16 and being placed on the bottom surface can lean against a desired side wall surface and can be stably supported.

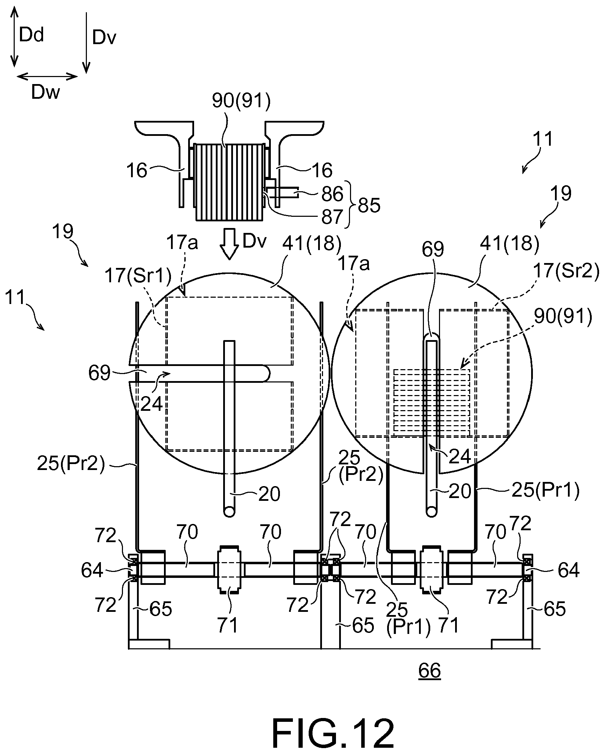

Further, a bag bundle detection device capable of detecting whether or not a bag bundle 90 to be picked up by the holding members 16 actually exists at a predetermined place (that is, a planned place) may be provided. In this case, it is possible to perceive in advance whether or not a bag bundle 90 is disposed at the planned location. If a bag bundle 90 is not arranged at the planned place, the holding members 16 may omit the operation for picking up a bag bundle 90 from the planned place and may pick up a bag bundle 90 from another planned place. For example, as shown in Fig. 12, a bag bundle detection device 85 may be attached to a holding member 16. The bag bundle detection device 85 shown in Fig. 12 includes: a detection sensor 86 which performs emission of a detection light such as a laser light and performs reception of the reflected light (i.e., the detection light); and a through hole 87 which is formed in a holding member 16 at a position facing the detection sensor 86. The detection light emitted from the detection sensor 86 passes through the through hole 87 and travels toward the location (between the holding member pair 16) at which a bag bundle 90 held by the holding members 16 is disposed.

In the bag conveyance apparatus 11 having the configuration shown in Fig. 12, when a bag bundle 90 arranged in the planned place (for example, the stocker 15) is picked up by the holding members 16, the holding members 16 are moved toward the planned place in a state where the holding members 16 forming a pair is widened to have a larger distance therebetween than the bag bundle 90, and the holding members 16 are placed in a posture and in a position such that the bag bundle 90 arranged in the planned place is disposed between the holding members 16. In this arrangement, if a bag bundle 90 is actually arranged in the planned place, the bag bundle 90 faces the detection sensor 86 via the through hole 87. On the other hand, in this arrangement, if a bag bundle 90 is not arranged in the planned place, the detection sensor 86 faces no bag bundle 90 via the through hole 87. Thus, if a bag bundle 90 is actually disposed at the planned place, the detection light from the detection sensor 86 is incident on the bag bundle 90 via the through hole 87 and is reflected by the bag bundle 90, and the reflected light is incident on the detection sensor 86 via the through hole 87. On the other hand, if no bag bundle 90 is arranged at the planned place, the detection light from the detection sensor 86 passes through the through hole 87 but does not enter a bag bundle 90 and is not reflected by a bag bundle 90, and therefore, the reflected light does not enter the detection sensor 86. Actually, even if the detection light is not reflected by a bag bundle 90, the detection light may be reflected by another member such as the holding members 16 or the like. However, the detection sensor 86 can determine whether or not the reflected light is the light reflected by a bag bundle 90 according to the intensity of the reflected light received by the detection sensor 86. In order to prevent the incidence of light reflected by objects (for example, the holding members 16) other than a bag bundle 90 on the detection sensor 86, an object (a holding member 16 or the like) disposed at a position facing the detection sensor 86 via the through hole 87 may be subjected to any processing for suppressing light reflection, for example.

As described above, it is possible to determine whether or not a bag bundle 90 is actually disposed at a planned place according to the light reception state of the reflected light in the detection sensor 86. If a bag bundle 90 is actually disposed at a planned place, the bag bundle 90 is picked up by the holding members 16 as described above. On the other hand, if a bag bundle 90 is not actually arranged at a planned place, the holding members 16 may be moved so as to pick up a bag bundle 90 arranged at another planned place. As a result, it is possible to avoid the wasteful pick-up operation of a bag bundle 90 in a case where a bag bundle 90 is not arranged at a planned place and to speed up the process. The control of the above-described bag bundle detection device 85, the judgment of the presence or absence of arrangement of a bag bundle 90 at a planned place, and the drive control of the holding members 16 based on that judgment can be performed by the control unit 50 or another control device.

The effects brought about by the present invention are not limited to the above-described effects, and specific effects corresponding to the specific configuration of each embodiment may be exerted. As described above, various additions, changes and partial deletions may be made to each element described in the claims, specification, abstract and drawings without departing from the technical concept and spirit of the present invention.

## Claims

1. A bag conveyance method comprising the steps of:
causing a holding member (16) to hold a bag bundle (90) including a plurality of bags (91);
delivering the bag bundle (90) in a standing posture from the holding member (16) to a delivery unit (17);
rotating the delivery unit (17) in such a manner that a posture of the bag bundle (90) held by the delivery unit (17) is changed from the standing posture to a lying posture; and
conveying the bag bundle (90) in the lying posture from the delivery unit (17) to a supply unit (22).

2. The bag conveyance method as defined in claim 1, wherein the holding member (16)
approaches the delivery unit (17) from above while holding the bag bundle (90),
releases the bag bundle (90) to deliver the bag bundle (90) to the delivery unit (17), and
after releasing the bag bundle (90), moves away from the delivery unit (17) upward.

3. A bag conveyance apparatus (11) comprising:
a stocker (15) in which a bag bundle (90) including a plurality of bags (91) is accommodated;
a holding member (16) which picks up and holds the bag bundle (90) accommodated in the stocker (15);
a posture change mechanism (19) which includes a delivery unit (17) to which the bag bundle (90) in a standing posture is delivered from the holding member (16), and a rotation mechanism (18) which rotates the delivery unit (17) to change a posture of the bag bundle (90) held by the delivery unit (17) from the standing posture to a lying posture; and
a conveyance unit (23) which includes a push unit (20) and a conveyance drive mechanism (21) driving the push unit (20), and causes the conveyance drive mechanism (21) to drive the push unit (20) in such a manner that the push unit (20) moves the bag bundle (90) in the lying posture from the delivery unit (17) toward a supply unit (22).

4. The bag conveyance apparatus (11) as defined in claim 3, wherein:
the plurality of posture change mechanisms (19) are provided, and
the plurality of conveyance units (23) are provided and are assigned to the plurality of posture change mechanisms (19) respectively.

5. The bag conveyance apparatus (11) as defined in claim 3 or 4, wherein:
the delivery unit (17) has an opening part (17a), a first wall part (17b) which faces the opening part (17a), and a second wall part (17c) which extends in a direction forming 90 degrees with respect to a direction in which the first wall part (17b) extends,
the holding member (16) delivers the bag bundle (90) to the delivery unit (17) through the opening part (17a),
the bag bundle (90) in the standing posture delivered from the holding member (16) is placed on the first wall part (17b), and
the bag bundle (90) in the lying posture held by the delivery unit (17) is placed on the second wall part (17c).

6. The bag conveyance apparatus (11) as defined in any one of claims 3 to 5, wherein:
the delivery unit (17) has a groove (24) which extends toward the supply unit (22), and
the push unit (20) is driven by the conveyance drive mechanism (21) to travel in the groove (24) to move the bag bundle (90) from the delivery unit (17) toward the supply unit (22).

7. The bag conveyance apparatus (11) as defined in any one of claims 3 to 6 comprising a guide member (25) which is able to be placed in a regulation position (Pr1) for restricting a position of the bag bundle (90) held by the delivery unit (17) and in a retreat position (Pr2) for not restricting a position of the bag bundle (90) held by the delivery unit (17), wherein,
the delivery unit (17) has a cutout portion (26), and
the guide member (25) placed in the regulation position (Pr1) is located in the cutout portion (26), and the guide member (25) placed in the retreat position (Pr2) is located outside the cutout portion (26).

8. The bag conveyance apparatus (11) as defined in any one of claims 3 to 7 comprising a detection unit (32), wherein,
the push unit (20) arranges the bag bundle (90) in a supply position (Pt) of the supply unit (22),
the detection unit (32) detects presence or absence of a bag (91) in the supply position (Pt), and
the conveyance drive mechanism (21) drives the push unit (20) according to detection result of the detection unit (32) in such a manner that a new bag bundle (90) is conveyed toward the supply position (Pt) according to presence or absence of a bag (91) in the supply position (Pt).
